# EUROPEAN PATENT SPECIFICATION

(11) **EP 2 635 736 B1**
(45) Date of publication and mention of the grant of the patent: **16.01.2019**
(21) Application number: 11805971.6
(22) Date of filing: 03.11.2011
(51) Int. Cl.: H01F 7/18, H02H 11/00, D06F 39/14

(54) **IMPROVED ACTUATOR MODULE, SYSTEM FOR LOCKING- UNLOCKING A DOOR OF A HOUSEHOLD APPLIANCE AND RELATIVE OPERATING METHOD.**
VERBESSERTES BETÄTIGERMODUL, SYSTEM ZUR VERRIEGELUNG/ENTRIEGELUNG EINER TÜR EINES HAUSHALTSGERÄTS UND ENTSPRECHENDES BEDIENUNGSVERFAHREN
MODULE D'ACTIONNEUR AMÉLIORÉ, SYSTÈME POUR VERROUILLER/DÉVERROUILLER UNE PORTE D'UN APPAREIL DOMESTIQUE ET PROCÉDÉ DE FONCTIONNEMENT ASSOCIÉ

(30) Priority: 04.11.2010 IT RM20100582
(43) Date of publication of application: 11.09.2013
(73) Proprietor: BITRON S.p.A., 10122 Torino (IT)
(72) Inventor: PROMUTICO, Fabrizio, I-10122 Torino (IT)
(74) Representative: Tiburzi, Andrea
(86) International application number: PCT/IT2011/000368
(87) International publication number: WO 2012/059950

(56) References cited:
- EP-A1- 2 105 527
- EP-A2- 1 808 558
- WO-A1-2010/026536
- WO-A1-2012/042554

## Description

The present invention relates to an improved actuator module, system for locking-unlocking a door of a household appliance and relative operating method.

More specifically, the invention concerns a module enabling or disabling a movable element by an electromagnetic field immune to any electrical or magnetic noise and capable of operating silently.

In the following, the description will be directed to an electromagnetic actuator for locking or unlocking a door of a household appliance, such as a washing machine, but it is clear that the same should not be considered as limited to this specific use.

As it is well known at present there are several safety systems to allow the opening or closing of a door of a washing machine.

Door lock-unlock devices according to the prior art are disclosed, for example, in U.S. patent U.S. 6,334,637 B1 or in Italian patent application TO2006A000026, both owned by the Applicant. In such systems, the lock-unlock device comprises essentially a mechanical module, suitable to retain or release a prong integral with the door, and an electric module, comprising an activation electromechanical unit. Said electromechanical activation unit is provided with a solenoid and a core movable by magnetic field generated by said solenoid. Said activation electromechanical unit also comprises a mechanical element, having a hook at one end, and a saw-toothed wheel, with which said hook is able to engage. Said saw-toothed wheel is capable to control, with its appropriate rotation, a safety pin, which can assume a rest or retracted position, in which it does not interact with said mechanical module, and an active or extracted position, in which it interacts with said mechanical module, to prevent opening the door when it is closed and the machine is turned on or running.

The above assembly and said saw-toothed wheel are made so that the rotation of a preset angle of the saw-toothed wheel is required to extract the safety pin, which occurs after activation of the movable core by a first pulse; while two (at least one, anyway) rotations of the same angle of rotation of the saw-toothed wheel are required to retract the safety pin, which occurs, therefore, after two activations of the movable core, i.e. two pulses.

Therefore, in devices according to the prior art, the current pulse to the solenoid, which is necessary to translate the movable core, is about 20 milliseconds or less.

However, when the washing machine or the appliance in general is operating, it is necessary that the safety pin does not return to rest position, i.e. does not retract. For this purpose, always in the prior art, a PTC resistor (Positive Temperature Coefficient) is provided, arranged in series with the power supply terminal of the solenoid.

As well known, the PTC resistors increase their resistance proportionally to their temperature and, therefore, the current flowing through them. Therefore, when the door is closed and the washing machine is turned on, the first impulse, i.e. the impulse for extracting the safety pin, is prolonged for the duration of the operating cycle of the household appliance. After about one or two seconds, the PTC resistor reaches a resistance of the order of 15 megaohms, drastically reducing the current through the solenoid and, therefore, its magnetic field. Thus, the movable core returns to rest position and solenoid is protected from interference signals.

A problem that occurs in the devices according to prior art is that when the device is put into protection, during the period, which is, as said above, about one or two seconds long, that elapses so that the PTC resistor reaches a resistance so as to reduce the current passing through the solenoid to negligible values, the movable core vibrates, creating an annoying hum.

The patent application WO 2010/026536 A, that belongs to the prior art, solves the above problem providing two permanent magnets in correspondence of the ends of a permanent magnetical core movable by a solenoid, suitable to hold it in position.

This solution makes the assembly more cumbersome and expensive.

WO2012/042554 is a document under Art. 54(3) EPC. It discloses an actuator module comprising an actuator unit comprising an enclosure, a solenoid,a core movable due to the electromagnetic field generated by said solenoid, wherein the actuating unit can be controlled by activation signals and protection signals,and it further comprises a PTC (Positive Temperature Coefficient) module. In contrast to the present invention WO2012042554 does not disclose an activation unit, where the protection signals excite continuously the solenoid, so generating a magnetic field adapted to return and hold the movable core pushing continuously the core end on the wall of the enclosure.

In view of the above, it is therefore an object of the present invention to provide an actuator module immune to electrical or electromagnetic interference that does not generate noise or hum when put into protection.

Another object of the invention is to provide a household appliance door locking-unlocking system using such actuator module.

Another object of the present invention is to provide an operating method of the actuator module and/or of the locking-unlocking system according to the present invention.

These and other results are obtained according to the invention by an actuator module provided with switch means, so as to be controlled by appropriately polarized signals.

It is therefore a specific object of the present invention a actuator module comprising an actuating unit, said actuating unit comprising a solenoid, capable, when excited, of generating an electromagnetic field, and a core, movable due to the electromagnetic field generated by said solenoid, said movable core being having a first and a second ends, said movable core being able to assume a resting position and an operating position, said actuator module being characterized in that said movable core is magnetic and/or magnetizable, and in that said actuating unit can be controlled by activation signals and protection signals, said activation signals being capable of energizing said solenoid so as to generate a magnetic field such as to move and hold said movable core from said resting position to said operating position, and said protection signals being capable of exciting said solenoid so as to generate a magnetic field such as to return and hold said movable core in said resting position.

Always according to the invention, said activation signals could be constituted of pulses having a first polarization and said protection signals are constituted of pulses having a second polarization, opposite to said first polarization.

Still according to the invention, said movable core could be a permanent magnet.

Further according to the invention, said movable core could be made of magnetizable material and said module could comprise a permanent magnet disposed near said first end of said movable core.

Always according to the invention, said movable core could comprise a PTC (Positive Temperature Coefficient) resistor connected in series with said solenoid.

Still according to the invention, said actuating unit could comprise a mechanical member having a first end connected with said first end of said movable core, and a hook-shaped second end.

Further according to the invention, said module could comprise a safety unit connectable to, and controllable by, a control logic unit, and a control mechanism capable of interacting with a mechanical module suitable to hold or release a prong or the like, said actuating unit being capable to interact with said control mechanism, and said safety unit being capable of enabling and disabling the operation of said control mechanism.

Advantageously according to the invention, said safety unit could comprise a bi-metal foil capable to deform its own shape as a consequence of the increase in temperature to which it is subjected, a further PTC resistor, arranged higher than said bi-metal foil, so as to be in thermal and electrical contact with it, and a lever, which is in contact with said resistor, said control mechanism could comprises a safety pin coupled with said lever and capable to assume a rest position, where it is retracted, and an active position, where it is extracted, and a toothed wheel, preferably a saw-toothed wheel, said safety pin being arranged in said toothed wheel, said toothed wheel being provided with an internal locking-release mechanism, interacting with said safety pin, so as to block or release the movement of said safety pin, so as to be capable to release said safety pin as a consequence of at least one rotation step, so that said safety pin can assume said active position, and as a consequence of at least one additional step of said toothed wheel, said toothed wheel being capable to prevent said safety pin to assume said active position, and said second end of said mechanical member is engaged with said toothed wheel, so that it may cause a rotation step of said toothed wheel at every excitation of said solenoid.

Always according to the invention, said solenoid could be the coil of an actuator, of a relay or of a magnetic control switch.

It is further object of the present invention a system for locking-unlocking a door of a household appliance, such as a washing machine, comprising a mechanic module suitable to hold or release a prong integral to the door of said household appliance, an actuator module as defined above, such that when said safety pin of said actuator module assumes said rest position, said actuator module does not interact with said mechanic module, while when said safety pin assumes said active position said actuator module interacts with said mechanical module to prevent the release of said prong of said door, and a control logic unit suitable to generate said activation and protection signals on a first and a second electric terminal of said solenoid, said control logic unit being capable of generating said activation signals and said protection signals of said actuator module.

It is also object of the present invention a method for protecting a locking-unlocking system as defined above, comprising the step of generating a protection signal, in order to hold said movable core in said resting position and to increase the resistance of said PTC resistor, for the whole time interval in which it is desired to protect said system.

Always according to the invention, said method could comprise the following additional steps: before said generation step of said protection signal, generating a first activation signal by said control logic unit, so as to set said safety pin in said active position; and after said step of generation of said protection signal, generating a second activation signal by said control logic unit, so as to set said safety pin in said rest position.

Still according to the invention, said first activation signal could be constituted of an electrical pulse having a first polarization, said second activation signal is constituted of an electrical pulse having said first polarization, and said protection signal is constituted of a plurality of electrical pulses having a second polarization, opposite to said first polarization.

The present invention will be now described, for illustrative but not limitative purposes, according to its preferred embodiments, with particular reference to the figures of the enclosed drawings, wherein:
figure 1 shows a first embodiment of an opened actuator module;
figure 2 shows a plan view of an opened actuator module according to figure 1;
figure 3 shows a cross section along the section line A-A of the actuator module according to figure 1;
figure 4 shows a perspective view of a solenoid;
figure 5 shows the connection electrical circuit of a solenoid together with the activation and protection signals waveforms of the actuator module, according to the present invention; and
figure 6 shows a second embodiment of an actuator module according to the present invention.

In the various figures, similar parts will be indicated by the same reference numbers.

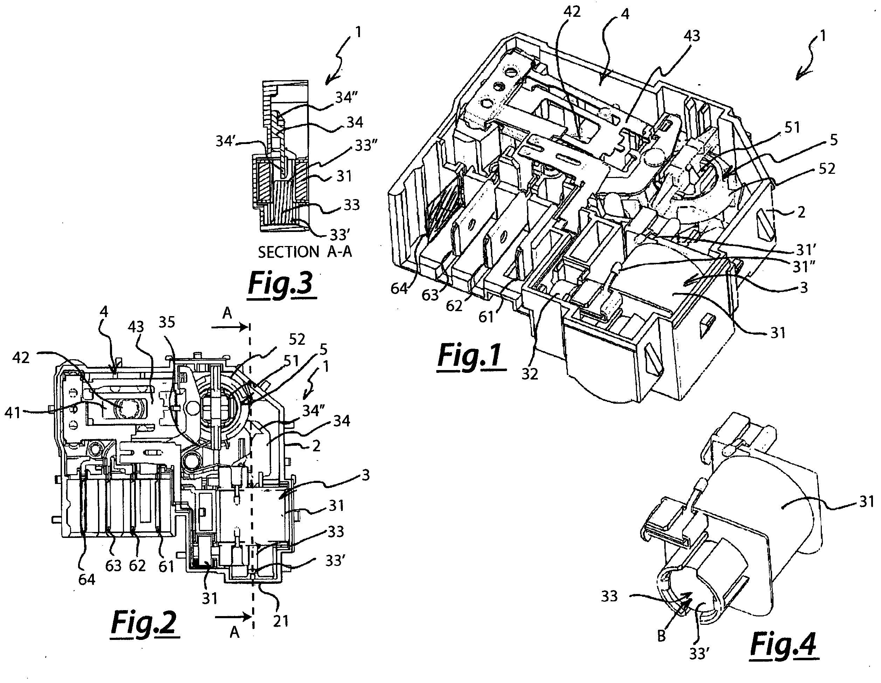

Referring to figures 1 to 4 there is an actuator module 1 having an enclosure 2, wherein an actuating unit 3, a safety unit 4, a control mechanism 5 of a safety pin 51, and control terminals 61, 62, 63 and 64, to which a control logic Unit not shown in the figures is connected, are provided.

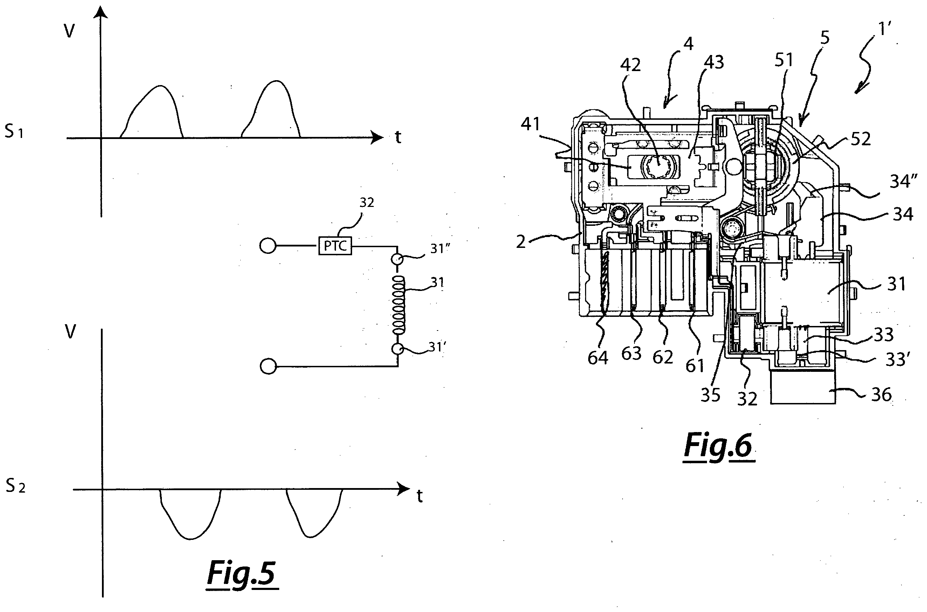

The actuator unit 3 comprises a solenoid 31, which has a first 31' and a second 31" terminal for its power supply. Said actuator unit 3 also includes a PTC resistor 32 (Positive Temperature Coefficient) connected as shown in figure 5, i.e. in series with said solenoid 31, in particular with terminal 31".

Said actuator unit 3 also includes a movable core 33 which in this embodiment is a magnet having a first 33' and a second 33" end. Said movable core 33 is arranged within said solenoid 31 and is capable to assume a resting position, in which it is at least partially extracted from said solenoid 31 and said first end and 33' is substantially adjacent (abutted) to the wall 21 of the enclosure 2, and an operating position, in which said movable core 33 is moved along the direction B, arranging within said solenoid 31, so that said first end 33' is spaced from said wall 21 of the enclosure 2.

Finally, said actuating unit 3 comprises an actuating member 34 having a first end 34' coupled with said second end 33' of said movable core 33 and a hook-shaped second end 34". A return spring 35 of said actuating member 34 is also provided.

Safety unit 4 comprises a substantially bi-metal plate 41, electrically connected to said terminal 64. Said bi-metal plate 41 is capable to deform its shape (curving) after an increase in temperature to which it is subjected to. Said safety unit 4 also comprises an additional PTC resistor 42, arranged above said bi-metal plate 41, so as to be in thermal and electrical contact with it, and a lever 43 in contact with said resistor 42. More details about the operation of said safety unit 4 will be provided below.

The control mechanism 5 comprises, in addition to the safety pin 51, a saw-toothed wheel 52. Said safety pin 51 is arranged along the symmetry axis of said saw-toothed wheel 52, within said saw-toothed wheel 52, and interacts with a locking-release mechanism, which is internal to said toothed wheel, whose operation will be better described below. In addition, said safety pin 51 is also connected with said lever 43.

Safety pin 51 can assume a rest position (retracted), in which it does not interact with a mechanical module to hold or release a prong integral with the door of the Washing machine, and an active position, or extracted (considering figure 2, the extracted position is when the safety pin 51 moves entering through the sheet), in which it interacts with said mechanical module, when the door is closed and the washing machine is turned on, preventing the opening of the door.

Said second end 34" is capable of engaging with said teeth of said saw-toothed wheel 52. Said saw-toothed wheel 52 moves in steps, of a preset rotation angle corresponding to a tooth, which, in this case, are 12. After the first step, said locking-release mechanism of said saw-toothed wheel 52 releases the safety pin 51, so that it can also assume said active or extracted position; while, after at least one additional step (in the present embodiment 2), said locking-release mechanism of said saw toothed wheel 52 prevents said safety pin 51 to assume said active or extracted position.

The operation of the actuator module 1 described above is as follows.

When the door of the, washing machine is closed and the washing machine is turned on, by an appropriate command, movable core 33 is in said resting position, i.e. with the first end 33' abutted to the wall 21 of the enclosure 2. The control logic unit transmits a signal on terminal 64, so that an electric current flows through said additional PTC resistor 42. The latter raises its temperature and hence that of the bi-metal plate 41, which curves, lifting the PTC resistor 42 and, through it, the lever 43. The latter, in its turn, exerts a force on the safety pin 51 to enable it, when it is free to arrange in said active or extracted position,_to assume said active or extracted position is prevented by said saw-toothed wheel 52, and in particular by said locking-release mechanism, which is in a position to prevent said safety pin 5,1 to assume said position active or extracted.

Subsequently, or substantially the same time, the control logic unit generates an activation signal between terminals 63 and 62 having the waveform of the signal S1, shown in figure 5, which comprises positive electrical pulses polarized with respect to a common terminal. In this case, said pulses are positive half-waves of a sinusoidal signal, but it could also be realized using different waveforms, e.g. quadratic, triangular, etc.

In general, said control logic unit generates a single pulse or a positive half wave, lasting, in this case, 10 milliseconds. In any case, the polarization of said control signal S1 is such as to generate a magnetic field in the solenoid 31, so that said magnetic field is of opposite polarity to that of the movable core 33, so that said movable core 33 is drawn into the solenoid 31 itself.

In this way, said movable core 33 passes from said resting position to said operating position. Said actuating member 34 through the second end 34" rotates one-twelfth (i.e. one step) of a revolution said saw-toothed wheel 52, i.e. it makes a step. Safety pin 51 passes, once released from the action of said locking-release mechanism, from said resting position (retracted) to said active position or extracted, under the effect of the force exerted by said lever 43. In this way, said safety pin 51 interacts with said mechanical module to prevent the opening of the door.

The current flowing through the solenoid 31, and then through the PTC resistor 32, has a very short duration (a pulse or a half-wave), that is, as said above, of the order of 10 milliseconds, and in any case short enough not to allow the PTC resistor 32 appreciably increase its temperature and hence resistance.

After the pulse S1, the magnetic field generated by said solenoid 31 is damped and the actuating member 34, due to the return spring 35, returns to a position of disengagement from the tooth of the saw-toothed wheel 52, as well as movable core 33 returns to its rest position.

In case of multiple positive pulses were generated, for example due to a malfunction of the control logic unit, PTC resistor 32 heats up, reaching after about 1 second a high resistance, of the order of 15 megaohms, so as to simulate a open circuit and to protect the solenoid 31 from overheating.

When the safety pin 51 is in active position, said control logic unit generates, between terminals 63 and 62, a signal having the waveform of signal S2, which comprises trains of negative half-waves, which polarity is opposite to that of said activation signal S1, as shown in figure 5, keeping the negative voltage on the terminal 63. Thus, the magnetic field generated by said solenoid 31 is inverted with respect to that generated by the signal S1, so as to exert a force on the movable core 33 in the direction of the arrow C (opposite to the arrow B), so pushing continuously end 33' on the wall 21. In the meantime, current can flow through the PTC resistor 32. Said PTC resistor 32 heats up and after a time interval of about 1 or 2 seconds, it reaches a high resistance, of the order of 15 megaohms, to simulate an open circuit. In this time interval, movable core 33 does not vibrate because of variable magnetic field generated by said solenoid. In fact, due to the pressure exerted by the magnetic field generated by said solenoid 31, before the current through said solenoid 31 is substantially interrupted by said PTC resistor 32, the movable core 33 is blocked to said wall 21, preventing any hum due to possible vibration of the movable core 22 itself.

Furthermore, the washing machine is in a safety condition, which is required for example when it carries out a spin-drying operation, i.e. a program such that opening the door could be very dangerous. In fact, if a positive signal, even a positive polarization signal, were generated, no current could pass through the solenoid 31, due to the high resistance of the PTC resistor 32, which simulates an open circuit.

When the washing machine (or household appliance in general) has completed the operating program, said control logic unit interrupts signal S2, which, as said above, is a negative pulses train, between terminals 63 and 62. After an appropriate time interval necessary to reduce the temperature of the PTC resistor 32 and thus to reduce its resistance, said control logic unit transmits two positive pulses S1, so that said saw-toothed wheel 52 makes two steps to bring said safety pin 51 in said rest position, i.e. retracted.

In general, for reducing the recovery time of the PTC resistor 32, a heat sink element in thermal contact with is provided.

At the same time, then, said control logic unit interrupts the current flow through said additional PTC resistor 42, which, cooling together with said bimetal, allows the latter to return to its natural shape, disabling the lever 43, so exercising no more force on the safety pin 51.

Figure 6 shows a second embodiment of an actuator module 1' according to the present invention, in which movable core 33 is not magnetic, but made of magnetizable material, while the wall 21 is provided with a permanent magnet 36, which, due to the magnetic field that it creates in the surrounding space, tends to maintain said first end 33' of said movable core 33 abutted to said wall 21, when the solenoid 31 is not powered. When excited by said signal S1, the solenoid 31 generates a stronger intensity magnetic field opposite to the permanent one of said magnet 36, so as to overcome its force and to draw said movable core 33, which is suitably polarized, toward its interior, distancing said first end 31' from said wall 21 and passing said movable core 33, therefore, from said resting position to said operating position.

The operation of said actuator module 1' of said second embodiment is substantially analogous to that of said first embodiment, when said solenoid is powered by said signal S2.

It is to be noted that the actuator module according to the invention can be applied to any type of actuator, relays or magnetic control switches.

An advantage of the actuator module according to the invention is also that of allowing to hold said movable core in resting or active position, by appropriate pulsed signals, which enables to change the state, but not to activate the PTC safety system, without the necessity to provide magnets, suitable to lock them into position.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Actuator module (1, 1') comprising an actuating unit (3), said actuating unit comprising
an enclosure (2) provided with a wall (21),
a solenoid (31), capable, when excited, of generating an electromagnetic field, and
a core (33), movable due to the electromagnetic field generated by said solenoid (31), said movable core (33) being having a first (33') and a second (33") ends, said movable core (33) being able to assume a resting position and an operating position, said core being magnetic and/or magnetizable,
said actuating unit (3) can be controlled by activation signals and protection signals, said activation signals being capable of energizing said solenoid (31) so as to generate a magnetic field such as to move and hold said movable core (33) from said resting position to said operating position,
said activation signals are constituted of pulses having a first polarization and said protection signals are constituted of pulses having a second polarization, opposite to said first polarization,
said first activation signal is constituted of at least one electrical pulse having a first polarization and said protection signal is constituted of a plurality of electrical pulses having a second polarization, opposite to said first polarization, and
said actuator module (1) further comprises a PTC (Positive Temperature Coefficient) resistor (32) connected in series with said solenoid (31), wherein said protection signals are capable of exciting continuously said solenoid (31) so as to generate a magnetic field such as to return and hold said movable core (33) in said resting position so pushing continuously the end (33') on the wall (21) of said enclosure (2).

2. Actuator module (1, 1') according to claim 1, **characterized in that** said movable core (33) is a permanent magnet.

3. Actuator module (1') according to anyone of the preceding claims, **characterized in that** said movable core (33) is made of magnetizable material and **in that** said module (1') comprises a permanent magnet (36) disposed near said first end (33') of said movable core (33).

4. Actuator module (1, 1') according to anyone of the preceding claims, **characterized in that** said actuating unit (3) comprises a mechanical member (34) having a first end (36') connected with said first end (33') of said movable core (33), and a hook-shaped second end (36").

5. Actuator module (1, 1') according to anyone of the preceding claims, **characterized in that** it comprises a safety unit (4) connectable to, and controllable by, a control logic unit, and a control mechanism (5) capable of interacting with a mechanical module suitable to hold or release a prong or the like, said actuating unit (3) being capable to interact with said control mechanism (5), and said safety unit (4) being capable of enabling and disabling the operation of said control mechanism (5).

6. Actuator module (1, 1') according to claim 5, **characterized in that**
said safety unit (4) comprises a bi-metal foil (41) capable to deform its own shape as a consequence of the increase in temperature to which it is subjected, a further PTC resistor (42), arranged higher than said bi-metal foil (41), so as to be in thermal and electrical contact with it, and a lever (43), which is in contact with said resistor (42),
**in that** said control mechanism (5) comprises a safety pin (51) coupled with said lever (43) and capable to assume a rest position, where it is retracted, and an active position, where it is extracted, and a toothed wheel, preferably a saw-toothed (52) wheel, said safety pin (51) being arranged in said toothed wheel (52), said toothed wheel (52) being provided with an internal locking-release mechanism, interacting with said safety pin (51), so as to block or release the movement of said safety pin (51), so as to be capable to release said safety pin (51) as a consequence of at least one rotation step, so that said safety pin (51) can assume said active position, and as a consequence of at least one additional step of said toothed wheel (52), said toothed wheel (52) being capable to prevent said safety pin (51) to assume said active position, and
**in that** said second end (34") of said mechanical member (34) is engaged with said toothed wheel (52), so that it may cause a rotation step of said toothed wheel (52) at every excitation of said solenoid (31).

7. Actuator module (1, 1') according to anyone of the preceding claims, **characterized in that** said solenoid (31) is the coil of an actuator, of a relay or of a magnetic control switch.

8. System for locking-unlocking a door of a household appliance, such as a washing machine, comprising
a mechanic module suitable to hold or release a prong integral to the door of said household appliance,
an actuator module (1, 1') as defined in claims 1-7, such that when said safety pin (51) of said actuator module (1, 1') assumes said rest position, said actuator module (1, 1') does not interact with said mechanic module, while when said safety pin (51) assumes said active position said actuator module (1, 1') interacts with said mechanical module to prevent the release of said prong of said door, and
a control logic unit suitable to generate said activation and protection signals (S1, S2) on a first (31') and a second (31") electric terminal of said solenoid (31), said control logic unit being capable of generating said activation signals and said protection signals of said actuator module (1, 1').

9. Method for protecting a locking-unlocking system as defined in claim 8, comprising the following step:
- generating a protection signal (S2), in order to hold said movable core (33) in said resting position and to increase the resistance of said PTC resistor (32), for the whole time interval in which it is desired to protect said system.

10. Method according to claim 9, **characterized in that** it comprises the following additional steps:
- before said generation step of said protection signal (S2), generating a first activation signal (S1) by said control logic unit, so as to set said safety pin (51) in said active position; and
- after said step of generation of said protection signal (S2), generating a second activation signal (S1) by said control logic unit, so as to set said safety pin (51) in said rest position.

11. Method according to claim 10, **characterized in that** said first activation signal is constituted of an electrical pulse having a first polarization, said second activation signal is constituted of an electrical pulse having said first polarization, and said protection signal is constituted of a plurality of electrical pulses having a second polarization, opposite to said first polarization.

## Patentansprüche

1. Betätigermodul (1, 1'), umfassend eine Betätigungseinheit (3), wobei die Betätigungseinheit umfasst
ein Gehäuse (2), das mit einer Wand (21) versehen ist,
einen Elektromagneten (31), der bei Anregung in der Lage ist, ein elektromagnetisches Feld zu erzeugen, und
einen Kern (33), der aufgrund des von dem Elektromagneten (31) erzeugten elektromagnetischen Feldes beweglich ist, wobei der bewegliche Kern (33) ein erstes (33') und ein zweites (33") Ende aufweist, wobei der bewegliche Kern (33) in der Lage ist, eine Ruheposition und eine Betriebsposition einzunehmen, wobei der Kern magnetisch und/oder magnetisierbar ist,
die Betätigungseinheit (3) durch Aktivierungssignale und Schutzsignale gesteuert werden kann, wobei die Aktivierungssignale in der Lage sind, den Elektromagneten (31) zu erregen, um ein Magnetfeld zu erzeugen, das den beweglichen Kern (33) aus der Ruheposition in die Betriebsposition bewegt und hält,
die Aktivierungssignale aus Impulsen mit einer ersten Polarisation bestehen und die Schutzsignale aus Impulsen mit einer zweiten Polarisation entgegengesetzt zur ersten Polarisation bestehen,
das erste Aktivierungssignal aus mindestens einem elektrischen Impuls mit einer ersten Polarisation gebildet ist, und das Schutzsignal aus einer Vielzahl von elektrischen Impulsen mit einer zweiten Polarisation entgegengesetzt zur ersten Polarisation gebildet ist, und
das Betätigermodul (1) weiter einen PTC-Widerstand (Positiver Temperaturkoeffizient) (32) umfasst, der in Reihe mit dem Elektromagneten (31) geschaltet ist,
wobei die Schutzsignale in der Lage sind, den Elektromagneten (31) kontinuierlich anzuregen, um so ein Magnetfeld zu erzeugen, das den beweglichen Kern (33) in die Ruheposition zurückführt und hält, so dass das Ende (33') an der Wand (21) des Gehäuses (2) kontinuierlich geschoben wird.

2. Betätigermodul (1, 1') nach Anspruch 1, **dadurch gekennzeichnet, dass** der bewegliche Kern (33) ein Permanentmagnet ist.

3. Betätigermodul (1') nach einem der vorstehenden Ansprüche, **dadurch gekennzeichnet, dass** der bewegliche Kern (33) aus magnetisierbarem Material hergestellt ist und dass das Modul (1') einen Permanentmagneten (36) umfasst, der nahe dem ersten Ende (33') des beweglichen Kerns (33) angeordnet ist.

4. Betätigermodul (1, 1') nach einem der vorstehenden Ansprüche, **dadurch gekennzeichnet, dass** die Betätigungseinheit (3) ein mechanisches Element (34) mit einem ersten Ende (36'), das mit dem ersten Ende (33') des beweglichen Kerns (33) verbunden ist, und einem hakenförmigen zweiten Ende (36") umfasst.

5. Betätigermodul (1, 1') nach einem der vorstehenden Ansprüche, **dadurch gekennzeichnet, dass** es eine Sicherheitseinheit (4), die mit einer Steuerlogikeinheit verbindbar und durch diese steuerbar ist, und einen Steuermechanismus (5), der mit einem mechanischen Modul interagieren kann, das geeignet ist, einen Zinken oder dergleichen zu halten oder freizugeben, umfasst, wobei die Betätigungseinheit (3) mit dem Steuermechanismus (5) interagieren kann, und die Sicherheitseinheit (4) in der Lage ist, den Betrieb des Steuermechanismus (5) zu aktivieren und deaktivieren.

6. Betätigermodul (1, 1') nach Anspruch 5, **dadurch gekennzeichnet, dass** die Sicherheitseinheit (4) eine Bimetallfolie (41), die in der Lage ist, ihre eigene Form infolge der Temperaturerhöhung, der sie ausgesetzt ist, zu verformen, einen weiteren PTC-Widerstand (42), der höher als die Bimetallfolie (41) angeordnet ist, um in thermischem und elektrischem Kontakt mit ihr zu stehen, und einen Hebel (43), der mit dem Widerstand (42) in Kontakt steht, umfasst,
dass der Steuermechanismus (5) einen Sicherheitsstift (51), der mit dem Hebel (43) gekoppelt ist und in der Lage ist, eine Ruheposition, in die er eingefahren ist, und eine aktive Position, in die er ausgefahren ist, einzunehmen, und ein Zahnrad, vorzugsweise ein Sägezahnrad (52), umfasst, wobei der Sicherheitsstift (51) in dem Zahnrad (52) angeordnet ist, wobei das Zahnrad (52) mit einem inneren Verriegelungs-Freisetzungs-Mechanismus versehen ist, der mit dem Sicherheitsstift (51) zusammenwirkt, um die Bewegung des Sicherheitsstiftes (51) zu blockieren oder freizugeben, um in der Lage zu sein, den Sicherheitsstift (51) als Folge von mindestens einem Drehschritt freizugeben, so dass der Sicherheitsstift (51) die aktive Position einnehmen kann, und als Folge von mindestens einem zusätzlichen Schritt des Zahnrades (52), das Zahnrad (52) in der Lage ist, zu verhindern, dass der Sicherheitsstift (51) die aktive Position einnimmt, und
dass das zweite Ende (34") des mechanischen Elements (34) mit dem Zahnrad (52) in Eingriff steht, so dass es bei jeder Anregung des Elektromagneten (31) einen Drehschritt des Zahnrades (52) verursachen kann.

7. Betätigermodul (1, 1') nach einem der vorstehenden Ansprüche, **dadurch gekennzeichnet, dass** der Elektromagnet (31) die Spule eines Betätigers, eines Relais oder eines magnetischen Steuerschalters ist.

8. System zur Verriegelung-Entriegelung einer Tür eines Haushaltsgerätes, wie beispielsweise einer Waschmaschine, umfassend
ein mechanisches Modul, das geeignet ist, einen in die Tür des Haushaltgeräts integrierten Zinken zu halten oder freizugeben,
ein Betätigermodul (1, 1') nach Ansprüchen 1-7, so dass, wenn der Sicherheitsstift (51) des Betätigermoduls (1, 1') die Ruheposition einnimmt, das Betätigermodul (1, 1') nicht mit dem mechanischen Modul zusammenwirkt, während, wenn der Sicherheitsstift (51) die aktive Position einnimmt, das Betätigermodul (1, 1') mit dem mechanischen Modul zusammenwirkt, um das Lösen des Zinkens der Tür zu verhindern, und
eine Steuerlogikeinheit, die geeignet ist, die Aktivierungs- und Schutzsignale (S1, S2) an einem ersten (31') und einem zweiten (31") elektrischen Anschluss des Elektromagneten (31) zu erzeugen, wobei die Steuerlogikeinheit in der Lage ist, die Aktivierungssignale und die Schutzsignale des Betätigermoduls (1, 1') zu erzeugen.

9. Verfahren zum Schutz eines Verriegelung-Entriegelung-Systems nach Anspruch 8, umfassend den folgenden Schritt:
- Erzeugen eines Schutzsignals (S2), um den beweglichen Kern (33) in der Ruheposition zu halten und den Widerstand des PTC-Widerstands (32) für das gesamte Zeitintervall, in dem das System geschützt werden soll, zu erhöhen.

10. Verfahren nach Anspruch 9, **dadurch gekennzeichnet, dass** es die folgenden zusätzlichen Schritte umfasst:
- vor dem Erzeugungsschritt des Schutzsignals (S2) Erzeugen eines ersten Aktivierungssignals (S1) durch die Steuerlogikeinheit, um den Sicherheitsstift (51) in die aktive Position zu bringen; und
- nach dem Schritt des Erzeugens des Schutzsignals (S2) Erzeugen eines zweiten Aktivierungssignals (S1) durch die Steuerlogikeinheit, um den Sicherheitsstift (51) in die Ruheposition zu bringen.

11. Verfahren nach Anspruch 10, **dadurch gekennzeichnet, dass** das erste Aktivierungssignal aus einem elektrischen Impuls mit einer ersten Polarisation besteht, das zweite Aktivierungssignal aus einem elektrischen Impuls mit der ersten Polarisation besteht und das Schutzsignal aus einer Vielzahl von elektrischen Impulsen mit einer zweiten Polarisation, entgegengesetzt zur ersten Polarisation, besteht.

## Revendications

1. Module d'actionneur (1, 1') comprenant une unité d'actionnement (3), ladite unité d'actionnement comprenant
une enceinte (2) pourvue d'une paroi (21),
un solénoïde (31) capable, lorsqu'il est excité, de générer un champ électromagnétique, et
un noyau (33), mobile du fait du champ électromagnétique généré par ledit solénoïde (31), ledit noyau mobile (33) ayant une première (33') et une seconde (33") extrémité, ledit noyau mobile (33) pouvant prendre une position de repos et une position de fonctionnement, ledit noyau étant magnétique et/ou magnétisable,
ladite unité d'actionnement (3) peut être commandée par des signaux d'activation et des signaux de protection, lesdits signaux d'activation étant capables d'alimenter ledit solénoïde (31) de façon à générer un champ magnétique de façon à déplacer ledit noyau mobile (33) à partir de ladite position de repos jusqu'à ladite position d'actionnement et à l'y maintenir,
lesdits signaux d'activation sont constitués d'impulsions ayant une première polarisation et lesdits signaux de protection sont constitués d'impulsions ayant une seconde polarisation, opposée à ladite première polarisation,
ledit premier signal d'activation est constitué d'au moins une impulsion électrique ayant une première polarisation et ledit signal de protection est constitué d'une pluralité d'impulsions électriques ayant une seconde polarisation, opposée à ladite première polarisation, et
ledit module d'actionneur (1) comprend en outre une résistance à coefficient de température positif (CTP) (32) reliée en série audit solénoïde (31),
dans lequel lesdits signaux de protection sont capables d'exciter de façon continue ledit solénoïde (31) de façon à générer un champ magnétique de façon à faire revenir et à maintenir ledit noyau mobile (33) dans ladite position de repos poussant ainsi de façon continue l'extrémité (33') sur la paroi (21) de ladite enceinte (2).

2. Module d'actionneur (1, 1') selon la revendication 1, **caractérisé en ce que** ledit noyau mobile (33) est un aimant permanent.

3. Module d'actionneur (1') selon l'une quelconque des revendications précédentes, **caractérisé en ce que** ledit noyau mobile (33) est fait d'un matériau magnétisable et **en ce que** ledit module (1') comprend un aimant permanent (36) disposé à proximité de ladite première extrémité (33') dudit noyau mobile (33).

4. Module d'actionneur (1, 1') selon l'une quelconque des revendications précédentes, **caractérisé en ce que** ladite unité d'actionnement (3) comprend un élément mécanique (34) ayant une première extrémité (36') reliée à ladite première extrémité (33') dudit noyau mobile (33), et une seconde extrémité en forme de crochet (36").

5. Module d'actionneur (1, 1') selon l'une quelconque des revendications précédentes, **caractérisé en ce qu'**il comprend une unité de sécurité (4) pouvant être reliée à, et commandée par, une unité logique de commande, et un mécanisme de commande (5) capable d'interagir avec un module mécanique apte à maintenir ou libérer un ergot ou similaire, ladite unité d'actionnement (3) étant capable d'interagir avec ledit mécanisme de commande (5), et ladite unité de sécurité (4) étant capable d'activer et désactiver le fonctionnement dudit mécanisme de commande (5).

6. Module d'actionneur (1, 1') selon la revendication 5, **caractérisé en ce que**
ladite unité de sécurité (4) comprend une feuille bimétallique (41) capable de déformer sa propre forme en conséquence de l'augmentation de température à laquelle elle est soumise, une autre résistance CTP (42), agencée plus haut que ladite feuille bimétallique (41), de façon à être en contact thermique et électrique avec elle, et un levier (43), qui est en contact avec ladite résistance (42),
**en ce que** ledit mécanisme de commande (5) comprend une goupille de sécurité (51) couplée audit levier (43) et capable de prendre une position de repos, où elle est rentrée, et une position active, où elle est sortie, et une roue dentée, de préférence une roue à dents de scie (52), ladite goupille de sécurité (51) étant agencée dans ladite roue dentée (52), ladite roue dentée (52) étant pourvue d'un mécanisme interne de verrouillage/libération, interagissant avec ladite goupille de sécurité (51), de façon à bloquer ou libérer le déplacement de ladite goupille de sécurité (51), de façon à être capable de libérer ladite goupille de sécurité (51) en conséquence d'au moins un pas de rotation, de sorte que ladite goupille de sécurité (51) puisse prendre ladite position active, et en conséquence d'au moins un pas supplémentaire de ladite roue dentée (52), ladite roue dentée (52) étant capable d'empêcher ladite goupille de sécurité (51) de prendre ladite position active, et
**en ce que** ladite seconde extrémité (34") dudit élément mécanique (34) vient en prise avec ladite roue dentée (52), de sorte qu'elle peut provoquer un pas de rotation de ladite roue dentée (52) à chaque excitation dudit solénoïde (31).

7. Module d'actionneur (1, 1') selon l'une quelconque des revendications précédentes, caractérisé en ce ledit solénoïde (31) est la bobine d'un actionneur, d'un relais ou d'un commutateur de commande magnétique.

8. Système pour verrouiller/déverrouiller une porte d'un appareil électroménager, tel qu'un lave-linge, comprenant
un module mécanique apte à maintenir ou libérer un ergot intégré à la porte dudit appareil électroménager,
un module d'actionneur (1, 1') selon les revendications 1 à 7, tel que lorsque ladite goupille de sécurité (51) dudit module d'actionneur (1, 1') prend ladite position de repos, ledit module d'actionneur (1, 1') n'interagit pas avec ledit module mécanique, alors que lorsque ladite goupille de sécurité (51) prend ladite position active ledit module d'actionneur (1, 1') interagit avec ledit module mécanique pour empêcher la libération dudit ergot de ladite porte, et
une unité logique de commande apte à générer lesdits signaux d'activation et de protection (S1, S2) sur une première (31') et une seconde (31") borne électrique dudit solénoïde (31), ladite unité logique de commande étant capable de générer lesdits signaux d'activation et lesdits signaux de protection dudit module d'actionneur (1, 1').

9. Procédé pour protéger un système de verrouillage/déverrouillage selon la revendication 8, comprenant l'étape suivante :
- génération d'un signal de protection (S2), afin de maintenir ledit noyau mobile (33) dans ladite position de repos et d'augmenter la résistance de ladite résistance CTP (32), pendant l'intervalle de temps complet dans lequel il est souhaité de protéger ledit système.

10. Procédé selon la revendication 9, **caractérisé en ce qu'**il comprend les étapes supplémentaires suivantes :
- avant ladite étape de génération dudit signal de protection (S2), génération d'un premier signal d'activation (S1) par ladite unité logique de commande, de façon à placer ladite goupille de sécurité (51) dans ladite position active ; et
- après ladite étape de génération dudit signal de protection (S2), génération d'un second signal d'activation (S1) par ladite unité logique de commande, de façon à placer ladite goupille de sécurité (51) dans ladite position de repos.

11. Procédé selon la revendication 10, **caractérisé en ce que** ledit premier signal d'activation est constitué d'une impulsion électrique ayant une première polarisation, ledit second signal d'activation est constitué d'une impulsion électrique ayant ladite première polarisation, et ledit signal de protection est constitué d'une pluralité d'impulsions électriques ayant une seconde polarisation, opposée à ladite première polarisation.
